# EUROPEAN PATENT SPECIFICATION

(11) **EP 3 384 213 B1**
(45) Date of publication and mention of the grant of the patent: **28.08.2024**
(21) Application number: 16805949.1
(22) Date of filing: 16.11.2016
(51) Int. Cl.: F25B 49/02, F25B 1/10, F25D 29/00, F25D 11/00

(54) **ECONOMIZED DEVICE CONTROL FOR REFRIGERATION SYSTEMS**
STEUERUNG EINES ECONOMIZERS FÜR KÜHLSYSTEME
COMMANDE D'UN ÉCONOMISEUR POUR SYSTEMES DE REFRIGERATION

(30) Priority: 01.12.2015 US 201562261521 P
(43) Date of publication of application: 10.10.2018
(73) Proprietor: Carrier Corporation, Palm Beach Gardens, FL 33418 (US)
(72) Inventor: SUN, Jian, Syracuse New York 13221 (US); PERKOVICH, Mark J., Syracuse New York 13221 (US)
(74) Representative: Dehns
(86) International application number: PCT/US2016/062191
(87) International publication number: WO 2017/095631

(56) References cited:
- WO-A1-2011/049778
- WO-A1-2013/016403
- WO-A1-2014/120332
- WO-A2-2011/112495
- WO-A2-2012/037223

## Description

The present invention disclosed herein generally relates to refrigeration systems and, more particularly, economized device control for refrigeration systems.

A particular difficulty of transporting perishable items is that such items must be maintained within a temperature range to reduce or prevent, depending on the items, spoilage, or conversely damage from freezing. A transport refrigeration unit is used to maintain proper temperatures within a transport cargo space. The transport refrigeration unit can be under the direction of a controller. The controller ensures that the transport refrigeration unit maintains a certain environment (e.g., thermal environment) within the transport cargo space.

WO 2011/049778 discloses a method of the type defined in the preamble of claim 1; further, WO 2011/049778 discloses an apparatus according to the preamble of claim 8.

Viewed from a first aspect, the invention provides a method according to claim 1.

According to another aspect, the invention provides a refrigeration unit according to claim 8.

Further preferred features are set out in the dependent claims.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

The subject matter is particularly pointed out and distinctly claimed at the conclusion of the specification. The foregoing and other features, and advantages of the present disclosure are apparent from the following detailed description of preferred embodiments taken in conjunction with the accompanying drawings in which:
FIG. 1A is a schematic view of a tractor trailer system having a refrigeration unit and a cargo compartment;
FIG. 1B is a schematic view of a refrigeration unit for a cargo compartment of the tractor trailer system of FIG. 1A;
FIG. 2 is a schematic illustration of a refrigeration unit; and
FIG. 3 is a flow process of a method of operating a refrigeration unit according to the present invention.

As shown and described herein, various features of the disclosure will be presented. Various embodiments may have the same or similar features and thus the same or similar features may be labeled with the same reference numeral, but preceded by a different first number indicating the figure to which the feature is shown. Thus, for example, element "a" that is shown in FIG. X may be labeled "Xa" and a similar feature in FIG. Z may be labeled "Za." Although similar reference numbers may be used in a generic sense, various embodiments will be described and various features may include changes, alterations, modifications, etc. as will be appreciated by those of skill in the art, whether explicitly described or otherwise would be appreciated by those of skill in the art.

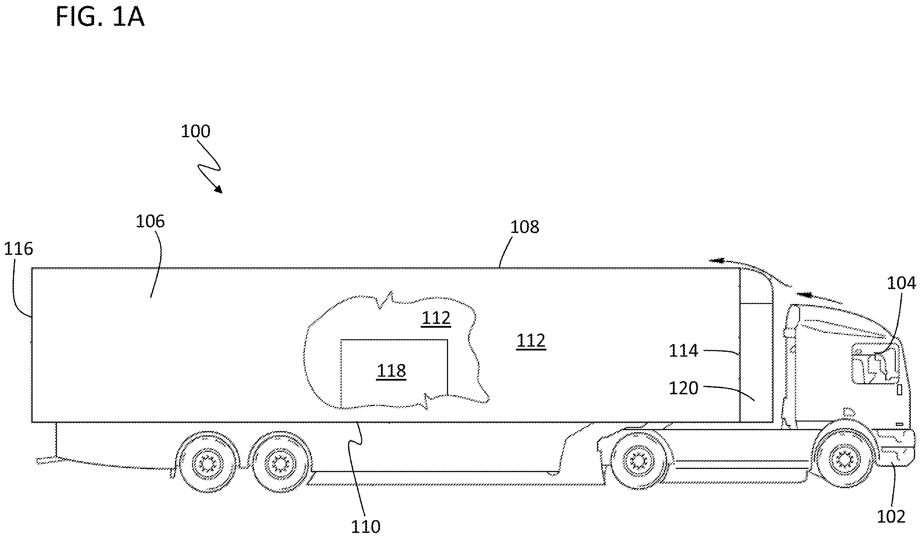

Shown in FIG. 1A is a schematic of an embodiment of a tractor trailer system 100. The tractor trailer system 100 includes a tractor 102 including an operator's compartment or cab 104 and also including an engine, which acts as the drive system of the tractor trailer system 100. A trailer 106 is coupled to the tractor 102. The trailer 106 is a refrigerated trailer 106 and includes a top wall 108, a directly opposed bottom wall 110, opposed side walls 112, and a front wall 114, with the front wall 114 being closest to the tractor 102. The trailer 106 further includes a door or doors (not shown) at a rear wall 116, opposite the front wall 114. The walls of the trailer 106 define a cargo compartment. The trailer 106 is configured to maintain a cargo 118 located inside the cargo compartment at a selected temperature through the use of a refrigeration unit 120 located on or next to the trailer 106. The refrigeration unit 120, as shown in FIG. 1A, is located at or attached to the front wall 114.

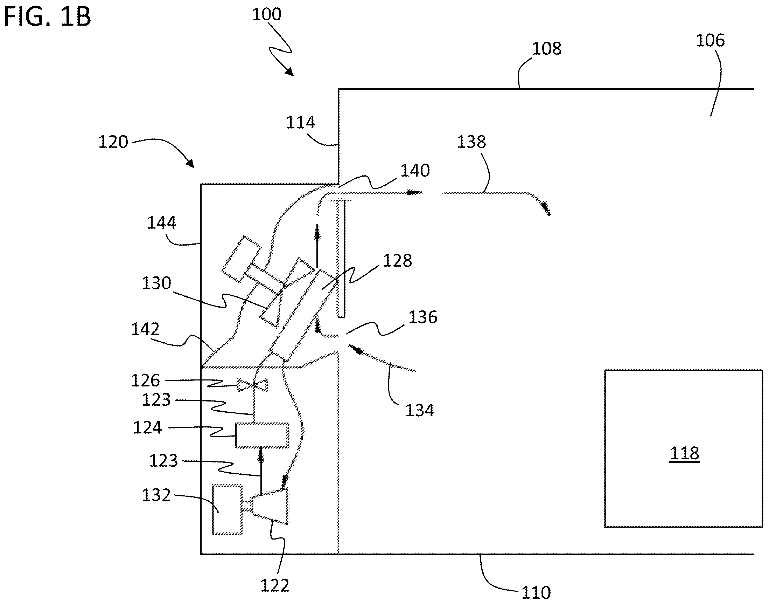

Referring now to FIG. 1B, the refrigeration unit 120 is shown in more detail. The refrigeration unit 120 includes a compressor 122, a condenser 124, an expansion valve 126, an evaporator 128, and an evaporator fan 130. The compressor 122 is operably connected to a refrigeration engine 132 which drives the compressor 122. The refrigeration engine 132 is connected to the compressor in one of several ways, such as a direct shaft drive, a belt drive, one or more clutches, and/or via an electrical generator. A refrigerant line 123 fluidly connects the components of the refrigeration unit 120.

Airflow is circulated into and through the cargo compartment of the trailer 106 by means of the refrigeration unit 120. A return airflow 134 flows into the refrigeration unit 120 from the cargo compartment of the trailer 106 through a refrigeration unit inlet 136, and across the evaporator 128 via the evaporator fan 130, thus cooling the return airflow 134 to a selected or predetermined temperature. The cooled return airflow 134, now referred to as supply airflow 138, is supplied into the cargo compartment of the trailer 106 through a refrigeration unit outlet 140, which in some embodiments is located near the top wall 108 of the trailer 106. The supply airflow 138 cools the cargo 118 in the cargo compartment of the trailer 106. It is to be appreciated that the refrigeration unit 120 can further be operated in reverse to warm the trailer 106 when, for example, the outside temperature is very low.

The refrigeration unit 120 is positioned in a frame 142 and contained in an accessible housing 144, with the frame 142 and/or the housing 144 secured to an exterior side of the front wall 114 such that the refrigeration unit 120 is positioned between the front wall 114 and the tractor 102, as shown in FIG. 1A.

It will be appreciated by those of skill in the art that the systems and configurations of FIGS. 1A and 1B are merely exemplary and provided for illustrative and descriptive purposes only. The invention is not limited thereby. For example, although a tractor trailer configuration is shown, systems may be employed in other trailer configurations, in various truck configurations, and/or in other systems and configurations.

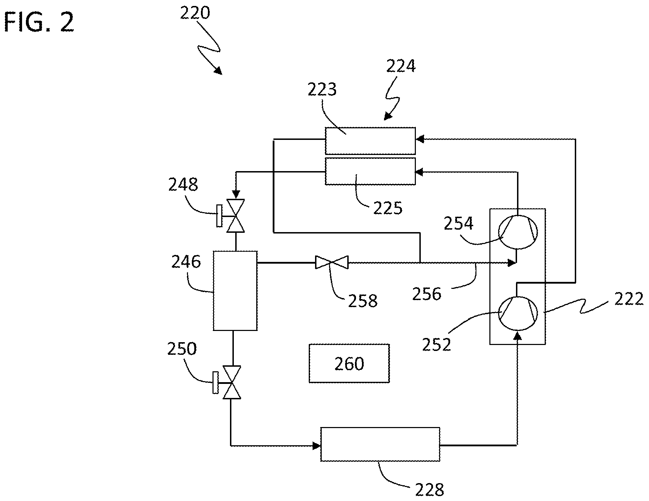

Turning now to FIG. 2, a refrigeration unit 220 in accordance with a non-limiting embodiment of the present disclosure is shown. The refrigeration unit 220 includes a compressor 222 that may be a scroll compressor; however, other compressors such as reciprocating or screw compressors are possible without limiting the scope of the disclosure. A motor (not shown) can be used to drive the compressor 222. For example, a motor can be an integrated electric drive motor driven by a synchronous generator, a commercial power service, an external power generation system (e.g., shipboard), a generator, or the like. The compressor 222 can be a multi-stage compression device.

In operation, high temperature, high pressure refrigerant vapor exiting the compressor 222 is directed to a condenser 224, which can include a plurality of condenser coil fins and tubes, which receive air, typically blown by a condenser fan. As shown, the condenser 224 may include an intercooler 223 and a gas cooler 225. By removing heat through the condenser 224, the refrigerant changes to a high pressure/lower temperature state.

The refrigerant may flow from the gas cooler 225 of the condenser 224 to a flash tank 246. A high-pressure expansion device 248 may be located between the gas cooler 225 and the flash tank 246. The flash tank 246 may be fluidly connected to an evaporator 228 and to a portion of the compressor 222. An electronic evaporator expansion valve 250 may be located between the flash tank 246 and the evaporator 228. The refrigerant may then flow from the evaporator 228 back to the compressor 222, to form a complete refrigerant circuit.

As shown and noted above, the compressor 222 may be a multi-stage compressor. As shown in FIG. 2, the compressor 222 includes a first stage 252 and a second stage 254. The refrigeration unit 220 can include an economizer solenoid valve 258 located between the flash tank 246 and the second stage 254 of the compressor 222. When the economizer solenoid valve 258 is active, the economizer solenoid valve 258 can open to allow refrigerant to pass through the flash tank 246 to enter the compressor second stage 254. The economizer solenoid valve 258 is controlled responsive to a pressure of the flash tank 246 and a calculated middle stage pressure as described herein. The calculated middle stage pressure may be a pressure within an economizer line 256 that is upstream of the second stage 254 of the compressor 222. The economizer solenoid valve 258 may be located on and control a fluid flow through the economizer line 256. As shown, an output from the intercooler 223 may be connected to an output of the economizer solenoid valve 258.

Many of the points in the refrigeration unit 220 can be monitored and controlled by a controller 260 and various associated sensors (not shown) located throughout the refrigeration unit 220. The controller 260 can include a microprocessor and an associated memory. The memory of controller 260 can contain operator and/or owner preselected, desired values for various operating parameters within the refrigeration unit 220 including, but not limited to, temperature set points for various locations within the refrigeration unit 220, pressure limits, current limits, engine speed limits, and any variety of other desired operating parameters or limits with the refrigeration unit 220. In one embodiment, the controller 260 can include a microprocessor board that contains a microprocessor and memory, an input/output (I/O) board that can include an analog to digital converter. The I/O board can receive temperature inputs and pressure inputs from various points in the system, i.e. from the various sensors, AC current inputs, DC current inputs, voltage inputs and humidity level inputs. In addition, the I/O board can include drive circuits or field effect transistors ("FETs") and relays to receive signals or current from the controller 260 and in turn control various external or peripheral devices in the refrigeration unit 220.

Among exemplary sensors and/or transducers monitored by controller 260 can be a return air temperature sensor that inputs into the controller 260 a variable resistor value according to the evaporator return air temperature. An ambient air temperature sensor that can provide the controller 260 an ambient air temperature value (e.g., detected in front of or upstream of the condenser 224). A compressor suction temperature sensor that can input to the controller 260 a variable resistor value according to a compressor suction temperature. A compressor discharge temperature sensor that can detect a compressor discharge temperature inside the compressor 222. An evaporator outlet temperature sensor and an evaporator outlet pressure transducer that can detect an outlet temperature value and an evaporator outlet pressure of evaporator 228. A compressor suction pressure transducer can provide the controller 260 a variable voltage according to a compressor suction value of the compressor 222. A compressor discharge pressure transducer that can provide to the controller 260 a variable voltage according to a compressor discharge value of compressor 222. In addition, a direct current sensor and an alternating current sensor can detect current drawn by the compressor 222. A sensor may be configured to read a pressure on the flash tank 246.

One function of the controller 260 is to open and/or close the economizer solenoid valve 258. The controller 260 may control the economizer solenoid valve 258 to ensure the refrigeration unit 220 operates in an economized mode whenever possible in order to gain increased capacity and efficiency from the refrigeration unit 220. One solution to ensure optimized economized mode operation is to apply dedicated and specific switch logic to force the system into economized mode by opening the economizer solenoid valve 258; however, this solution may create the risk of injecting high-density refrigerant into the compressor 222, which may be detrimental to the components of the system.

In some refrigeration systems, two conditions may exist to enable the system to run in the economized mode. The two conditions are (i) compressor middle stage pressure should be below the critical pressure of the refrigerant, and (ii) the high-pressure expansion device 248 and the electronic evaporator expansion valve 250 are capable to maintain the pressure in the flash tank 246 at a pressure equal to a pressure in the economizer line 256. Based on these two conditions, embodiments described herein provide an economizer solenoid valve, such as an economized solenoid valve, control process. The control process includes taking measurement of various pressures within the system, calculating or predicting a compressor middle stage pressure, and defining criteria to determine the economized solenoid valve to be open or closed - and thus operate in the economized mode.

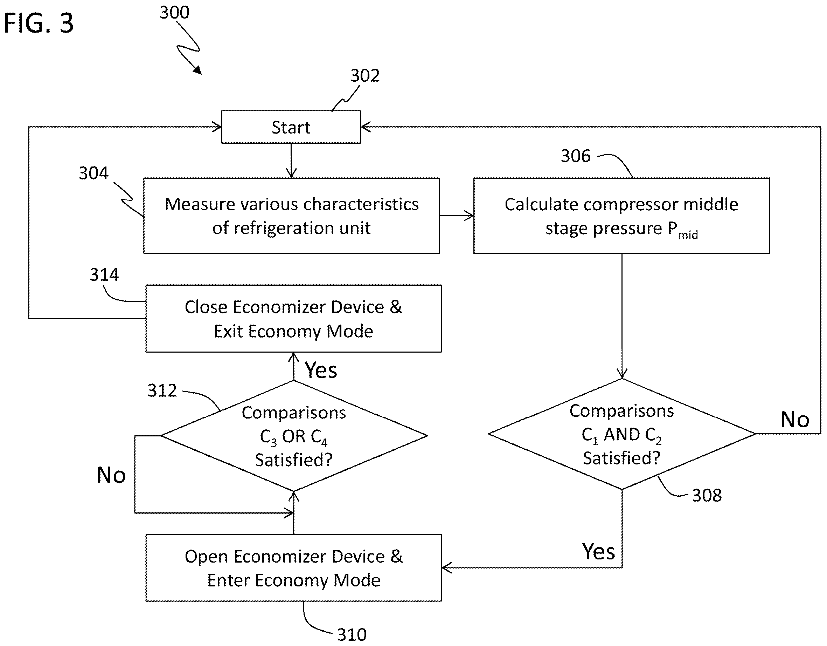

Turning now to FIG. 3, a flow process of controlling a refrigeration unit in accordance with a non-limiting embodiment of the present invention is shown. The flow process 300 may be employed by a refrigeration unit having a flash tank and in some embodiments is configured as shown and described above. The flow process 300 may be an operating routine or other program or programming that may be executed by a processor or other processing device. The flow process 300 incorporates readings or measurements of pressure at various positions or locations within a refrigeration unit and further involves calculations that may be processed on a processor or other device.

At the beginning of the flow process 300, an economizer solenoid valve may be in a closed state at block 302. In operation, in accordance with the invention, several measurements is taken within the refrigeration unit at block 304. According to the invention, the pressure within a flash tank P_{ft}, a compressor suction pressure P_{suc}, and a pressure at a discharge port P_{dis} is measured. The values may be conveyed to or read by a processor or other control device or controller.

The controller then predicts a pressure at a middle stage of the compressor P_{mid} at block 306. The middle stage pressure P_{mid} is based on the compressor suction pressure P_{suc} and the discharge pressure P_{dis}. The calculation may be based, in part, on the design and configuration of the refrigeration unit, and may in some embodiments, be based on the design and/or configuration of the compressor. For example, in a non-limiting embodiment, given a number of constants and/or known parameters (e.g., k₁, k₂, k₃), the middle stage pressure P_{mid} may be calculated with the following equation: *P_{mid}* = *k*₁ × (*P_{suc}* × *P_{dis}*)^{*k*2} + *k₃.*

Next, the controller makes comparisons of the various known/calculated values to determine if the refrigeration unit should be operated in an economized mode at block 308. For example, the calculated middle stage pressure P_{mid} may be compared to a known and/or predetermined value that is configured to enable operation of the refrigeration unit in an economized mode. Further, the flash tank pressure P_{ft} may be compared to a known and/or predetermined value.

According to the invention, as shown at block 308 of FIG. 3, the middle stage pressure P_{mid} is compared to a value that is a critical pressure of the refrigerant P_{crit}. Further, the pressure of the flash tank P_{ft} is also compared to the critical pressure of the refrigerant P_{crit}. According to the invention, the middle stage pressure P_{mid} comparison requires the critical pressure of the refrigerant P_{crit} to be modified by a first pressure constant dP₁. Thus, according to the invention of FIG. 3, at block 308, the controller may make the follow comparisons: a first comparison C₁: P_{mid} < (P_{crit} - dP₁) and a second comparison C₂: P_{ft} < P_{crit}. If it is determined that either the first comparison C₁ or the second comparison C₂ is not satisfied, the economizer solenoid valve will remain closed and the economized mode will not be entered. If this is the case, the process 300 will return to the start 302 and blocks 304-308 will be cycled or repeated to monitor for when both the first comparison C₁ and the second comparison C₂ are satisfied.

As such, when it is determined that both the first comparison C₁ and the second comparison C₂ are satisfied, the flow process 300 will continue to block 310 and the economizer solenoid valve will be opened. As shown, the economizer solenoid valve is referred to as an economized solenoid valve, but those of skill in the art will appreciate that other economizer solenoid valves may be used without departing from the scope of the present disclosure.

Next, at block 312, if the economizer solenoid valve is open for a period wherein if the flash tank pressure P_{ft} is greater than a predetermined value, the economizer solenoid valve will be closed. Thus, at block 312, the controller will make the following comparisons: a third comparison C₃: t[P_{ft} > (P_{crit} - dP₁)] > t₁ and a fourth comparison C₄: P_{ft} > (P_{crit} + dP₂).

In the third comparison C₃, the controller is tracking the time that the flash tank pressure P_{ft} is greater than a pressure valve based on the critical pressure of the refrigerant P_{crit} and comparing it against the predetermined time t₁. In the fourth comparison C₄, the controller is monitoring the flash tank pressure P_{ft} and ensuring that the pressure in the flash tank P_{ft} does not exceed a pressure value based on the critical pressure of the refrigerant P_{crit} as modified with a second pressure constant dP₂.

If it is determined that neither the third comparison C₃ nor the fourth comparison C₄ is satisfied, the economized mode will be maintained and the economizer solenoid valve will remain open. However, if it is determined that either of the third comparison C₃ or the fourth comparison C₄ are satisfied, the process 300 will continue to block 314 and the economizer solenoid valve will be closed. Once the economizer solenoid valve is closed and the economized mode is exited, the process 300 will begin again at block 302 and the pressures P_{ft}, P_{suc}, and P_{dis} will be measured and the middle stage pressure P_{mid} will be calculated (blocks 304, 306) and the values will be compared in the first comparison C₁ and the second comparison C₂ at block 308.

Advantageously, embodiments described herein provide a refrigeration unit having an improved economized mode operation and/or use. For example, advantageously in accordance with various embodiments, an improved economized solenoid valve control is provided by introducing a predicted or calculated compressor middle stage pressure into criteria for determining when to open or close an economizer solenoid valve. The economizer solenoid valve control as provided herein allows the system to operate in an economized mode when it should, and further eliminates the use of special switch logic. Further, advantageously, embodiments described herein avoid the risk of damaging the compressor of a refrigeration unit. Moreover, embodiments provided herein may ensure that a refrigeration unit or system will operate with optimized capacity and/or efficiency.

While the present invention has been described in detail in connection with only a limited number of embodiments, it should be readily understood that the present invention is not limited to such disclosed embodiments. Rather, the present invention can be modified to incorporate any number of variations, alterations, substitutions, combinations, subcombinations, or equivalent arrangements not heretofore described, but which are commensurate with the scope of the present invention, which is defined by the claims.

For example, although various embodiments described herein include specific components and/or arrangements of components, other components and/or substitutions thereof may be employed without departing from the scope of the present invention, which is defined by the claims. Further, although a process is described herein with a specific order of steps, those of skill in the art will appreciate that the process may include additional and/or alternative steps and further the steps may be performed in any order and/or simultaneously, without departing from the scope of the present invention, which is defined by the claims.

Accordingly, the present invention is not to be seen as limited by the foregoing description, but is only limited by the scope of the appended claims.

## Claims

1. A method for operating a refrigeration unit comprising a compressor (222), an economizer solenoid valve (258) and a flash tank (246), the method comprising:
measuring a first characteristic of the refrigeration unit, wherein the first characteristic comprises a flash tank pressure (P_{ft}), a compressor suction pressure (P_{suc}), and a discharge port pressure (P_{dis});
calculating a compressor middle stage pressure (P_{mid}) based on the compressor suction pressure (P_{suc}) and the discharge port pressure (P_{dis});
determining if a first comparison (C₁) and a second comparison (C₂) are satisfied based on the first measured characteristic and the calculated compressor middle stage pressure (P_{mid});
**characterized in that**:
the economizer solenoid valve (258) is opened when both the first comparison and the second comparison are satisfied,
the economizer solenoid valve is closed when either the first comparison or the second comparison is not satisfied, and
the first comparison (C₁) is a comparison of the compressor middle stage pressure (P_{mid}) against the critical pressure (P_{crit}) of the refrigerant modified by a first pressure constant (dP₁) wherein P_{mid} < (P_{crit} - dP₁), and the second comparison (C₂) is a comparison of the flash tank pressure (P_{ft}) against the critical pressure (P_{crit}) of the refrigerant, wherein the first comparison is satisfied when the middle stage pressure (P_{mid}) is below the critical pressure (P_{crit}) of the refrigerant modified by the first pressure constant (dP₁) and the second comparison is satisfied when the flash tank pressure (P_{ft}) is below the critical pressure (P_{crit}).

2. The method of claim 1, wherein the compressor middle stage pressure (P_{mid}) is calculated based on the compressor suction pressure and the discharge port pressure as *P_{mid}* = *k*₁ × (*P_{suc}* × *P_{dis}*)^{*k*2} + *k*₃, wherein k₁, k₂, k₃ are known parameters.

3. The method of any preceding claim, further comprising:
monitoring a second characteristic;
determining if a third comparison (C₃) or a fourth comparison (C₄) is satisfied based on the second characteristic; and
closing the economizer solenoid valve (258) when either the third comparison or the second comparison are satisfied.

4. The method of claim 2, wherein the second characteristic is at least one of (i) a time that the flash tank pressure (P_{ft}) exceeds the critical pressure (P_{crit}) modified by a first pressure constant (dP₁) and (ii) the flash tank pressure (P_{ft}).

5. The method of claim 3, wherein the third comparison (C₃) is satisfied if the time that the flash tank pressure exceeds the critical pressure (P_{crit}) modified by the first pressure constant (dP₁) exceeds a predetermined time.

6. The method of claim 3, wherein the fourth comparison (C₄) is satisfied if the flash tank pressure exceeds the critical pressure (P_{crit}) modified by a second pressure constant (dP₂).

7. The method of claim 2, further comprising, after closing the economizer solenoid valve (258), determining if the economizer solenoid valve should be opened again.

8. A refrigeration unit comprising:
a compressor (222);
a flash tank (246);
at least one sensor configured to measure a first characteristic of the refrigeration unit, wherein the first characteristic comprises a flash tank pressure (P_{ft}), a compressor suction pressure (P_{suc}), and a discharge port pressure (P_{dis});
a controller (260) configured to calculate a compressor middle stage pressure (P_{mid}) based on the compressor suction pressure (P_{suc}) and the discharge port pressure (P_{dis}), the controller further configured to determine if a first comparison (C₁) and a second comparison (C₂) is satisfied based on the first characteristic and the calculated compressor middle stage pressure (P_{mid}); and
an economizer solenoid valve (258);
**characterized in that**:
the controller is configured to open the economizer solenoid valve (258) when both the first comparison and the second comparison are satisfied,
and to close the economizer solenoid valve when either the first comparison or the second comparison is not satisfied, and
wherein the first comparison (C₁) is a comparison of the compressor middle stage pressure (P_{mid}) against a critical pressure (P_{crit}) of the refrigerant modified by a first pressure constant (dP₁) wherein P_{mid} < (P_{crit} - dP₁), and the second comparison (C₂) is a comparison of the flash tank pressure (P_{ft}) against the critical pressure (P_{crit}) of the refrigerant, wherein the first comparison is satisfied when the middle stage pressure (P_{mid}) is below the critical pressure (P_{crit}) of the refrigerant modified by the first pressure constant (dP₁) and the second comparison is satisfied when the flash tank pressure (P_{ft}) is below the critical pressure (P_{crit}).

9. The refrigeration unit of claim 8, wherein the controller is configured to calculate the compressor middle stage pressure (P_{mid}) based on the compressor suction pressure and the discharge port pressure as *P_{mid}* = *k₁* × (*P_{suc}* × *P_{dis}*)^{*k*2} + *k*₃, wherein k₁, k₂, k₃ are known parameters.

10. The refrigeration unit of claim 8, wherein the controller (220) is configured to determine if a third comparison (C₃) or a fourth comparison (C₄) is satisfied and wherein the economizer solenoid valve (258) is configured to close when either the third comparison or the second comparison are satisfied.

11. The refrigeration unit of claim 10, wherein the controller (220) is configured to monitor a second characteristic, wherein the second characteristic is at least one of (i) a time that the flash tank pressure (P_{ft}) exceeds a critical pressure (P_{crit}) modified by a first pressure constant (dP₁) and (ii) the flash tank pressure; and/or wherein the controller is further configured to determine if the economizer solenoid valve (258) should be opened again after the economizer solenoid valve is closed.

12. The refrigeration unit of claim 11, wherein the third comparison (C₃) is satisfied if the time that the flash tank pressure (P_{ft}) exceeds the critical pressure (P_{crit}) modified by the first pressure constant (dP₁) exceeds a predetermined time.

13. The refrigeration unit of claim 11, wherein the fourth comparison (C₄) is satisfied if the flash tank pressure (P_{ft}) exceeds the critical pressure (P_{crit}) modified by a second pressure constant (dP₂).

## Patentansprüche

1. Verfahren zum Betreiben einer Kühleinheit, die einen Verdichter (222), ein Economizer-Magnetventil (258) und einen Entspannungsbehälter (246) umfasst, wobei das Verfahren Folgendes umfasst:
Messen eines ersten Merkmals der Kühleinheit, wobei das erste Merkmal einen Entspannungsbehälterdruck (P_{ft}) , einen Verdichtersaugdruck (P_{suc}) und einen Auslassanschlussdruck (P_{dis}) umfasst;
Berechnen eines Verdichter-Mittelstufendrucks (P_{mid}) basierend auf dem Verdichtersaugdruck (P_{suc}) und dem Auslassanschlussdruck (P_{dis}) ;
Bestimmen, ob ein erster Vergleich (C₁) und ein zweiter Vergleich (C₂) erfüllt sind, basierend auf dem ersten gemessenen Merkmal und dem berechneten Verdichter-Mittelstufendruck (P_{mid});
**dadurch gekennzeichnet, dass**:
das Economizer-Magnetventil (258) geöffnet wird, wenn sowohl der erste Vergleich als auch der zweite Vergleich erfüllt sind,
das Economizer-Magnetventil geschlossen wird, wenn entweder der erste Vergleich oder der zweite Vergleich nicht erfüllt sind, und
der erste Vergleich (C₁) ein Vergleich des Verdichter-Mittelstufendrucks (P_{mid}) mit dem kritischen Druck (P_{crit}) des Kühlmittels ist, das durch eine erste Druckkonstante (dP₁) modifiziert wird, wobei P_{mid} < (P_{crit} - dP₁) ist und der zweite Vergleich (C₂) ein Vergleich des Entspannungsbehälterdrucks (P_{ft}) mit dem kritischen Druck (P_{crit}) des Kühlmittels ist, wobei der erste Vergleich erfüllt ist, wenn der Mittelstufendruck (P_{mid}) unter dem kritischen Druck (P_{crit}) des Kühlmittels liegt, das durch die erste Druckkonstante (dP₁) modifiziert wird, und der zweite Vergleich erfüllt ist, wenn der Entspannungsbehälterdruck (P_{ft}) unter dem kritischen Druck (P_{crit}) liegt.

2. Verfahren nach Anspruch 1, wobei der Verdichter-Mittelstufendruck (P_{mid}) basierend auf dem Verdichtersaugdruck und dem Auslassanschlussdruck als P_{mid} = k₁ × (*P_{suc}* × *P_{dis}*)^{*k*2} + k₃ berechnet wird, wobei k₁, k₂, k₃ bekannte Parameter sind.

3. Verfahren nach einem der vorhergehenden Ansprüche, ferner umfassend:
Überwachen eines zweiten Merkmals;
Bestimmen, ob ein dritter Vergleich (C₃) oder ein vierter Vergleich (C₄) erfüllt ist, basierend auf dem zweiten Merkmal; und
Schließen des Economizer-Magnetventils (258), wenn entweder der dritte Vergleich oder der zweite Vergleich erfüllt ist.

4. Verfahren nach Anspruch 2, wobei das zweite Merkmal mindestens eines von (i) einer Zeit, zu welcher der Entspannungsbehälterdruck (P_{ft}) den kritischen Druck (P_{crit}), der durch eine erste Druckkonstante (dP₁) modifiziert wird, überschreitet, und (ii) dem Entspannungsbehälterdruck (P_{ft}) ist.

5. Verfahren nach Anspruch 3, wobei der dritte Vergleich (C₃) erfüllt ist, wenn die Zeit, zu welcher der Entspannungsbehälterdruck den kritischen Druck (P_{crit}), der durch die erste Druckkonstante (dP₁) modifiziert wird, überschreitet, eine vorbestimmte Zeit überschreitet.

6. Verfahren nach Anspruch 3, wobei der vierte Vergleich (C₄) erfüllt ist, wenn der Entspannungsbehälterdruck den kritischen Druck (P_{crit}), durch eine zweite Druckkonstante (dP₂) modifiziert wird, überschreitet.

7. Verfahren nach Anspruch 2, ferner umfassend, nach dem Schließen des Economizer-Magnetventils (258), Bestimmen, ob das Economizer-Magnetventil erneut geöffnet werden soll.

8. Kühleinheit, umfassend:
einen Verdichter (222);
einen Entspannungsbehälter (246);
mindestens einen Sensor, der dazu konfiguriert ist, ein erstes Merkmal der Kühleinheit zu messen, wobei das erste Merkmal einen Entspannungsbehälterdruck (P_{ft}), einen Verdichtersaugdruck (P_{suc}) und einen Auslassanschlussdruck (P_{dis}) umfasst;
eine Steuerung (260), die dazu konfiguriert ist, einen Verdichter-Mittelstufendruck (P_{mid}) basierend auf dem Verdichtersaugdruck (P_{suc}) und dem Auslassanschlussdruck (P_{dis}) zu berechnen, wobei die Steuerung ferner dazu konfiguriert ist,
zu bestimmen, ob ein erster Vergleich (C₁) und ein zweiter Vergleich (C₂) basierend auf dem ersten Merkmal und dem berechneten Verdichter-Mittelstufendruck (P_{mid}) erfüllt sind; und
ein Economizer-Magnetventil (258);
**dadurch gekennzeichnet, dass**:
die Steuerung dazu konfiguriert ist, das Economizer-Magnetventil (258) zu öffnen, wenn sowohl der erste Vergleich als auch der zweite Vergleich erfüllt sind,
und das Economizer-Magnetventil zu schließen, wenn entweder der erste Vergleich oder der zweite Vergleich nicht erfüllt sind, und
wobei der erste Vergleich (C₁) ein Vergleich des Verdichter-Mittelstufendrucks (P_{mid}) mit dem kritischen Druck (P_{crit}) des Kühlmittels ist, das durch eine erste Druckkonstante (dP₁) modifiziert wird, wobei P_{mid} < (P_{crit} - dP₁) ist und der zweite Vergleich (C₂) ein Vergleich des Entspannungsbehälterdrucks (P_{ft}) mit einem kritischen Druck (P_{crit}) des Kühlmittels ist, wobei der erste Vergleich erfüllt ist, wenn der Mittelstufendruck (P_{mid}) unter dem kritischen Druck (P_{crit}) des Kühlmittels liegt, das durch die erste Druckkonstante (dP₁) modifiziert wird, und der zweite Vergleich erfüllt ist, wenn der Entspannungsbehälterdruck (P_{ft}) unter dem kritischen Druck (P_{crit}) liegt.

9. Kühleinheit nach Anspruch 8, wobei die Steuerung dazu konfiguriert ist, den Verdichter-Mittelstufendruck (P_{mid}) basierend auf dem Verdichtersaugdruck und dem Auslassanschlussdruck als P_{mid} = k₁ × (*P_{suc}* × P_{dis})^{k2} + k₃ zu berechnen, wobei k₁, k₂, k₃ bekannte Parameter sind.

10. Kühleinheit nach Anspruch 8, wobei die Steuerung (220) dazu konfiguriert ist, zu bestimmen, ob ein dritter Vergleich (C₃) oder ein vierter Vergleich (C₄) erfüllt ist, und wobei das Economizer-Magnetventil (258) dazu konfiguriert ist, zu schließen, wenn entweder der dritte Vergleich oder der zweite Vergleich erfüllt ist.

11. Kühleinheit nach Anspruch 10, wobei die Steuerung (220) dazu konfiguriert ist, ein zweites Merkmal zu überwachen, wobei das zweite Merkmal mindestens eines von (i) einer Zeit, zu welcher der Entspannungsbehälterdruck (P_{ft}) einen kritischen Druck (P_{crit}), der durch eine erste Druckkonstante (dP₁) modifiziert wird, überschreitet, und (ii) dem Entspannungsbehälterdruck ist; und/oder wobei die Steuerung ferner dazu konfiguriert ist, zu bestimmen, ob das Economizer-Magnetventil (258) erneut geöffnet werden soll, nachdem das Economizer-Magnetventil geschlossen wurde.

12. Kühleinheit nach Anspruch 11, wobei der dritte Vergleich (C₃) erfüllt ist, wenn die Zeit, zu welcher der Entspannungsbehälterdruck (P_{ft}) den kritischen Druck (P_{crit}), der durch die erste Druckkonstante (dP₁) modifiziert wird, überschreitet, eine vorbestimmte Zeit überschreitet.

13. Kühleinheit nach Anspruch 11, wobei der vierte Vergleich (C₄) erfüllt ist, wenn der Entspannungsbehälterdruck (P_{ft}) den kritischen Druck (P_{crit}), der durch eine zweite Druckkonstante (dP₂) modifiziert wird, überschreitet.

## Revendications

1. Procédé de fonctionnement d'une unité de réfrigération comprenant un compresseur (222), une électrovanne d'économiseur (258) et un réservoir de détente (246), le procédé comprenant :
la mesure d'une première caractéristique de l'unité de réfrigération, dans lequel la première caractéristique comprend une pression de réservoir de détente (P_{ft}), une pression d'aspiration de compresseur (P_{suc}) et une pression d'orifice de refoulement (P_{dis}) ;
le calcul d'une pression d'étage intermédiaire de compresseur (P_{mid}) sur la base de la pression d'aspiration de compresseur (P_{suc}) et de la pression d'orifice de refoulement (P_{dis}) ;
le fait de déterminer si une première comparaison (C₁) et une deuxième comparaison (C₂) sont satisfaites sur la base de la première caractéristique mesurée et de la pression d'étage intermédiaire de compresseur (P_{mid}) calculée ;
**caractérisé en ce que** :
l'électrovanne d'économiseur (258) est ouverte lorsque la première comparaison et la deuxième comparaison sont toutes deux satisfaites,
l'électrovanne d'économiseur est fermée lorsque soit la première comparaison, soit la deuxième comparaison n'est pas satisfaite, et
la première comparaison (C₁) est une comparaison de la pression d'étage intermédiaire de compresseur (P_{mid}) par rapport à la pression critique (P_{crit}) du réfrigérant modifiée par une première constante de pression (dP₁), dans lequel P_{mid} < (P_{crit} - dP₁), et
la deuxième comparaison (C₂) est une comparaison de la pression de réservoir de détente (P_{ft}) par rapport à la pression critique (P_{crit}) du réfrigérant, dans lequel la première comparaison est satisfaite lorsque la pression d'étage intermédiaire (P_{mid}) est inférieure à la pression critique (P_{crit}) du réfrigérant modifiée par la première constante de pression (dP₁) et la deuxième comparaison est satisfaite lorsque la pression de réservoir de détente (P_{ft}) est inférieure à la pression critique (P_{crit}) .

2. Procédé selon la revendication 1, dans lequel la pression d'étage intermédiaire de compresseur (P_{mid}) est calculée sur la base de la pression d'aspiration de compresseur et de la pression d'orifice de refoulement comme P_{mid} = k₁ × (P_{suc} × P_{dis} )^{k2} +k₃, dans lequel k₁, k₂, k₃ sont des paramètres connus.

3. Procédé selon une quelconque revendication précédente, comprenant en outre :
la surveillance d'une seconde caractéristique ;
le fait de déterminer si une troisième comparaison (C₃) ou une quatrième comparaison (C₄) est satisfaite sur la base de la seconde caractéristique ; et
la fermeture de l'électrovanne d'économiseur (258) lorsque soit la troisième comparaison, soit la deuxième comparaison sont satisfaites.

4. Procédé selon la revendication 2, dans lequel la seconde caractéristique est au moins l'un (i) d'un temps pendant lequel la pression de réservoir de détente (P_{ft}) dépasse la pression critique (P_{crit}) modifiée par une première constante de pression (dP₁) et (ii) de la pression de réservoir de détente (P_{ft}) .

5. Procédé selon la revendication 3, dans lequel la troisième comparaison (C₃) est satisfaite si le temps pendant lequel la pression de réservoir de détente dépasse la pression critique (P_{crit}) modifiée par la première constante de pression (dP₁) dépasse un temps prédéterminé.

6. Procédé selon la revendication 3, dans lequel la quatrième comparaison (C₄) est satisfaite si la pression de réservoir de détente dépasse la pression critique (P_{crit}) modifiée par une seconde constante de pression (dP₂).

7. Procédé selon la revendication 2, comprenant en outre, après la fermeture de l'électrovanne d'économiseur (258), le fait de déterminer si l'électrovanne d'économiseur doit être ouverte à nouveau.

8. Unité de réfrigération comprenant :
un compresseur (222) ;
un réservoir de détente (246) ;
au moins un capteur configuré pour mesurer une première caractéristique de l'unité de réfrigération, dans laquelle la première caractéristique comprend une pression de réservoir de détente (P_{ft}), une pression d'aspiration de compresseur (P_{suc}) et
une pression d'orifice de refoulement (P_{dis}) ;
un contrôleur (260) configuré pour calculer une pression d'étage intermédiaire de compresseur (P_{mid}) sur la base de la pression d'aspiration de compresseur (P_{suc}) et de la pression d'orifice de refoulement (P_{dis}), le contrôleur étant en outre configuré pour déterminer si une première comparaison (C₁) et une deuxième comparaison (C₂) est satisfaite sur la base de la première caractéristique et de la pression d'étage intermédiaire de compresseur (P_{mid}) calculée ; et
une électrovanne d'économiseur (258) ;
**caractérisée en ce que** :
le contrôleur est configuré pour ouvrir l'électrovanne d'économiseur (258) lorsque la première comparaison et la deuxième comparaison sont toutes deux satisfaites,
et pour fermer l'électrovanne d'économiseur lorsque soit la première comparaison, soit la deuxième comparaison n'est pas satisfaite, et
dans laquelle la première comparaison (C₁) est une comparaison de la pression d'étage intermédiaire de compresseur (P_{mid}) par rapport à une pression critique (P_{crit}) du réfrigérant modifiée par une première constante de pression (dP₁), dans laquelle P_{mid} < (P_{crit} - dP₁), et la deuxième comparaison (C₂) est une comparaison de la pression de réservoir de détente (P_{ft}) par rapport à la pression critique (P_{crit}) du réfrigérant, dans laquelle la première comparaison est satisfaite lorsque la pression d'étage intermédiaire (P_{mid}) est inférieure à la pression critique (P_{crit}) du réfrigérant modifiée par la première constante de pression (dP₁) et la deuxième comparaison est satisfaite lorsque la pression de réservoir de détente (P_{ft}) est inférieure à la pression critique (P_{crit}).

9. Unité de réfrigération selon la revendication 8, dans laquelle le contrôleur est configuré pour calculer la pression d'étage intermédiaire de compresseur (P_{mid}) sur la base de la pression d'aspiration de compresseur et de la pression d'orifice de refoulement comme P_{mid} = k₁× (P_{suc}× *P_{dis}*)^{k2} + k₃, dans laquelle k₁, k₂, k₃ sont paramètres connus.

10. Unité de réfrigération selon la revendication 8, dans laquelle le contrôleur (220) est configuré pour déterminer si une troisième comparaison (C₃) ou une quatrième comparaison (C₄) est satisfaite et dans laquelle l'électrovanne d'économiseur (258) est configurée pour se fermer lorsque soit la troisième comparaison, soit la deuxième comparaison sont satisfaites.

11. Unité de réfrigération selon la revendication 10, dans laquelle le contrôleur (220) est configuré pour surveiller une seconde caractéristique, dans laquelle la seconde caractéristique est au moins l'un (i) d'un moment auquel la pression de réservoir de détente (P_{ft}) dépasse une pression critique (P_{crit}) modifiée par une première constante de pression (dP₁) et (ii) la pression de réservoir de détente ; et/ou dans laquelle le contrôleur est en outre configuré pour déterminer si l'électrovanne d'économiseur (258) doit être ouverte à nouveau après la fermeture de l'électrovanne d'économiseur.

12. Unité de réfrigération selon la revendication 11, dans laquelle la troisième comparaison (C₃) est satisfaite si le temps auquel la pression de réservoir de détente (P_{ft}) dépasse la pression critique (P_{crit}) modifiée par la première constante de pression (dP₁) dépasse un temps prédéterminé.

13. Unité de réfrigération selon la revendication 11, dans laquelle la quatrième comparaison (C₄) est satisfaite si la pression de réservoir de détente (P_{ft}) dépasse la pression critique (P_{crit}) modifiée par une seconde constante de pression (dP₂) .
